# FASCICULE DE BREVET EUROPEEN

(11) **EP 3 862 223 B1**
(45) Date de publication et mention de la délivrance du brevet: **16.11.2022**
(21) Numéro de dépôt: 21155712.9
(22) Date de dépôt: 08.02.2021
(51) Int. Cl.: B60N 99/00, B60N 2/70, H02G 3/30, H01R 13/703, H01R 13/73, B60N 2/02

(54) **SUPPORT DE CONNECTEUR DE CÂBLES ÉLECTRIQUES**
HALTERUNG FÜR VERBINDER VON ELEKTRISCHEN KABELN
SUPPORT FOR ELECTRIC CABLE CONNECTOR

(30) Priorité: 10.02.2020 FR 2001262
(43) Date de publication de la demande: 11.08.2021
(73) Titulaire: Renault s.a.s, 92100 Boulogne Billancourt (FR)
(72) Inventeur: CHHEANG, Nakry, 78470 Saint Rémy les Chevreuses (FR)
(74) Mandataire: Renault Group

(56) Documents cités:
- US-A1- 2007 102 594

## Description

[La présente invention se rapporte à un support de connecteur de câbles électriques pour les véhicules automobiles.

Plus précisément, la présente invention concerne les supports de connecteur de câbles électriques mis en œuvre dans les sièges de véhicule automobile.

Les sièges sont usuellement équipés de câbles électriques pour pouvoir alimenter en énergie certains dispositifs, ou bien pour transmettre des signaux de commande ou de contrôle. Par exemple, les câbles électriques alimentent un dispositif de chauffage du siège ou bien encore des motorisations de réglage dudit siège. Aussi, les câbles électriques transmettent par exemple les signaux d'un capteur de présence sur le siège.

Ainsi, ces câbles sont respectivement connectés sous les sièges et ils s'étendent à travers leur ossature pour être masqués. Les câbles sont connectés au moyen de connecteurs présentant une partie mâle et une partie femelle dans laquelle elle s'engage.

Les connecteurs sont alors maintenus en position fixe par l'intermédiaire de supports de connecteur lesquels présentent une partie l'agrafage du connecteur et une partie d'ancrage du support dans l'ossature du siège.

Ainsi, on pourra se référer au document US 2007/0102 594A1, lequel décrit un support de connecteur présentant une partie d'ancrage prismatique munie d'ailettes déformables en saillie, pour pouvoir être engagé à force dans un orifice oblong de l'ossature et y demeurer emprisonné en position fixe.

De la sorte, le connecteur peut être ensuite relié à la partie d'agrafage et être ainsi immobilisé dans l'ossature du siège.

Un tel support de connecteur nécessite pour être mis en œuvre, de pratiquer un orifice dans une partie de l'ossature du siège, puis ensuite, de procéder à l'enfoncement de sa partie d'ancrage à travers l'orifice pour qu'il soit solidaire de l'ossature. Ces étapes de mise en œuvre sont relativement longues et grèvent les coûts d'installation des connecteurs de câbles électriques dans les sièges.

Aussi, un problème qui se pose et que vise à résoudre la présente invention est de fournir un support de connecteur de câbles électriques dont la mise en œuvre est plus économique.

Dans ce but, et selon un premier objet, il est proposé un support de connecteur de câbles électriques pour maintenir en position fixe un connecteur à l'intérieur d'un siège de véhicule automobile, ledit siège comportant une ossature et une mousse de rembourrage moulée, ledit support de connecteur comprenant une partie d'ancrage pour ancrer ledit support à l'intérieur dudit siège et une partie d'agrafage surmontant ladite partie d'ancrage, pour recevoir en prise ledit connecteur. Ladite partie d'ancrage est ajourée de manière à pouvoir venir en prise dans ladite mousse de rembourrage lorsque ladite mousse de rembourrage est moulée.

Ainsi une caractéristique de l'invention réside dans la mise en œuvre d'une partie d'ancrage ajourée du support de connecteurs qui puisse être surmoulée lors du moulage de la mousse de rembourrage. De la sorte, il n'est nul besoin de prévoir d'orifice particulier dans l'ossature pour y ancrer le support de connecteur. Et lors du montage du siège, on vient simplement relier ensemble le connecteur sur son support.

Le support de connecteur peut par exemple être inséré dans le moule de la mousse de rembourrage de telle sorte que la partie d'ancrage puisse être surmoulée. Durant l'injection du mélange de polymères dans le moule destiné à réaliser une mousse, le mélange s'écoule à travers les ajours de la partie d'ancrage, et la mousse de rembourrage se forme à mesure que les polymères réagissent les uns avec les autres. Par conséquent, la partie d'ancrage est emprisonnée dans la mousse de rembourrage, tandis que la partie d'agrafage demeure à la surface de la mousse de rembourrage.

Selon un mode de mise en œuvre de l'invention particulièrement avantageux, ladite partie d'ancrage comporte une plaque présentant une pluralité d'ajours. De la sorte, le support de connecteur est ajusté dans le moule de manière à ce que, la plaque ajourée de la partie d'ancrage, vienne s'étendre à distance et sensiblement parallèlement à la paroi du moule. De la sorte, après moulage, la plaque ajourée s'étend sous la surface externe de la mousse de rembourrage. Et par conséquent, le support de connecteurs est maintenu en position fixe dans la mousse. La plaque ajourée doit être suffisamment étendue pour assurer un parfaite ancrage. En revanche, sa taille doit être limitée, comme on l'expliquera dans la description détaillée au risque de rigidifier la mousse de rembourrage, et la rendre moins confortable.

Aussi, les ajours de ladite pluralité d'ajours sont de forme sensiblement rectangulaire. De la sorte, le mélange de polymères, avant que les polymères ne réagissent, s'écoule librement à travers les ajours de forme rectangulaire. Et ainsi, la partie d'ancrage est mieux emprisonnée dans la mousse.

Préférentiellement, lesdits ajours sont contiguës de manière à former des nervures croisées entre-elles. Les nervures se retrouvent alors emprisonnées dans la masse du polymère et par conséquent ensuite, de la mousse. Partant, la partie d'ancrage est plus encore emprisonnée dans la mousse. Conséquemment, le support d'ancrage offre une résistance importante à l'arrachement de la mousse de rembourrage.

Selon un mode de réalisation de l'invention particulièrement avantageux, ladite partie d'agrafage comprend une platine d'accostage présentant deux bordures libres opposées parallèles adaptées à recevoir ledit connecteur à coulissement. En effet, le connecteur, de façon usuelle, comporte deux glissières parallèles en regard et il est alors aisé de venir relier le connecteur à son support, en engageant les deux glissières parallèles respectivement sur les deux bordures libres opposées de la platine d'accostage, et en entraînant à coulissement le connecteur sur la platine. En bout de course, le connecteur et alors parfaitement solidaire de la platine.

En outre, ladite partie d'agrafage comprend une languette présentant une extrémité libre en retour opposée à ladite partie d'ancrage et formant butée, ladite languette s'étendant dans le prolongement de ladite platine selon une direction sensiblement parallèle auxdites bordures libres. Ainsi, la partie femelle du connecteur présente un logement et une ouverture délimitée par un bord, permettant à la partie mâle d'être engagée à l'intérieur du logement. Aussi, la partie femelle du connecteur présente les deux glissières parallèles et dans le prolongement, un mentonnet situé à l'extérieur au voisinage du bord ; le mentonnet venant alors en butée contre l'extrémité libre en retour de la languette pour venir bloquer en translation la partie femelle. La partie mâle peut alors être engagée à travers l'ouverture de la partie femelle en prenant en sandwich le mentonnet. De la sorte, le connecteur fait des deux parties, mâle et femelle, est maintenu en position fixe sur la partie d'agrafage.

Aussi, et de façon particulièrement avantageuse, ladite platine présente un bossage s'étendant d'une desdites bordures à l'autre, à l'opposé de ladite partie d'ancrage. Partant, grâce au bossage, les deux glissières parallèles opposées et en regard du connecteur sont engagées à force sur la platine d'accostage, car le bossage offre une possibilité de frottement supplémentaire. En conséquence, le connecteur est coincé sur la platine d'accostage. Il y est donc maintenu en position fixe.

Préférentiellement, le support de connecteur est moulé d'une seule pièce dans un matériau polymère. Il est par exemple réalisé en polyamide. De la sorte il est obtenu à un coût avantageux. Au surplus, le bossage précité se déforme élastiquement lorsqu'il est engagé à force à l'intérieur des glissières, et cela facilite ainsi le coincement.

Dans le but de résoudre le problème posé, et selon un second objet, il est proposé un siège de véhicule automobile comportant une ossature et une mousse de rembourrage moulée, ledit siège comprenant un support de connecteur tel que défini ci-dessus, ladite partie d'ancrage dudit support de connecteur étant noyée dans ladite mousse de rembourrage lorsque ladite mousse de rembourrage est moulée. Un tel siège a le mérite de pouvoir être installé aisément et plus rapidement dans le véhicule automobile en construction, s'agissant des connexions de câbles électriques traversant l'ossature du siège.

Aussi, avantageusement, ladite mousse de rembourrage présentant une surface libre, ladite partie d'ancrage dudit support de connecteur est noyée dans ladite mousse de rembourrage, tandis que ladite partie d'agrafage s'étend en saillie de ladite surface libre. La partie d'agrafage est alors libre d'accès pour pouvoir venir y fixer le connecteur de câbles électriques.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique en perspective de dessus d'un support de collecteur de câbles électriques conforme à l'invention ;
[Fig. 2] est une vue en coupe médiane longitudinale de l'objet de la [Fig. 1] selon une première étape de mise en œuvre ;
[Fig. 3] est une vue schématique en coupe transversale d'un élément apte à coopérer avec l'objet de la [Fig. 1] ;
[Fig. 4] est une vue schématique de côté de l'objet de la [Fig. 2] coopérant avec celui de la [Fig. 3], et apte à coopérer avec encore un autre élément ; et,
[Fig. 5] est une vue schématique en perspective des éléments représentés sur la [Fig. 1] de trois quarts avant.

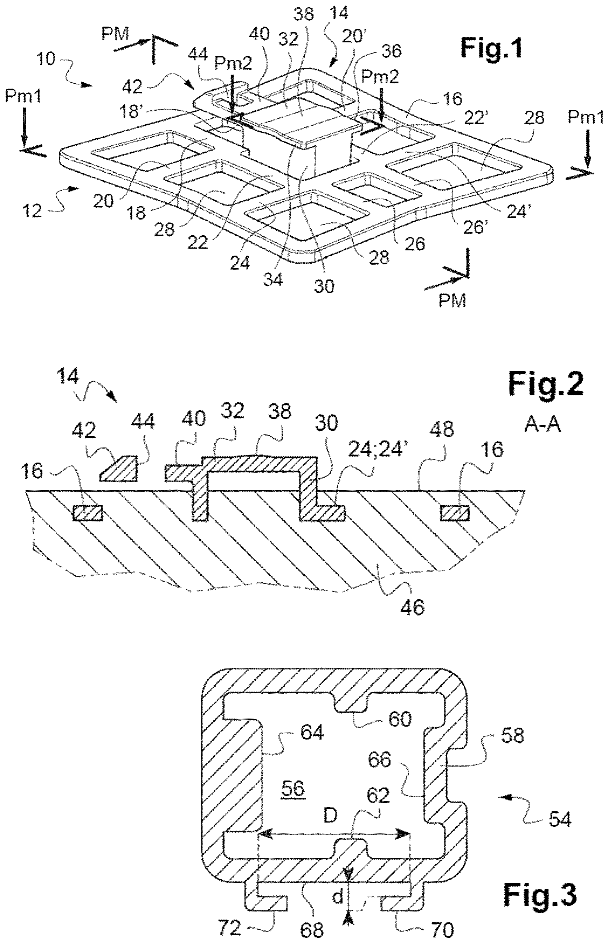

La Figure 1 montre un support de connecteur 10 conforme à l'invention. Il comporte une partie d'ancrage 12 surmonté d'une partie d'agrafage 14 dont elle est totalement solidaire. Et d'ailleurs, de façon particulièrement avantageuse, le support de connecteurs 10 est moulé d'une seule pièce dans un matériau polymère, par exemple du polyéthylène ou bien encore du polyamide.

La partie d'ancrage 12 s'étend selon un premier plan moyen Pm1, sous forme d'une grille sensiblement rectangulaire, dont les côtés sont par exemple d'une longueur comprise entre sept centimètres et dix centimètres. La partie d'ancrage 14 comporte ainsi un bord continu 16 et des nervures croisées 18, 20, 22, 24, et 26 symétriques de nervures croisées 18', 20', 22', 24', et 26' par rapport au plan médian PM de la partie d'ancrage 12. Les nervures croisées 18, 20, 22, 24, 26, 18', 20', 22', 24', et 26' sont respectivement sensiblement perpendiculaires entre elles et elles définissant alors huit ajours rectangulaires 28.

S'agissant de la partie d'agrafage 14, elle comprend une portion de liaison 30 sensiblement parallélépipédique rectangle, s'étendant au centre en saillie de la partie d'ancrage 12, et une platine d'accostage 32 située au sommet de la portion de liaison 28 et s'étendant selon un second plan moyen Pm2, sensiblement parallèle au premier plan moyen Pm1. La platine d'accostage 32 présente deux bordures opposées parallèles 34, 36 s'étendant en saillie de la portion de liaison 30. Au surplus, elle comporte un bossage 38 s'étendant transversalement d'une bordure 34 à l'autre 36.

Aussi, la partie d'agrafage 14 comprend une languette 40 s'étendant du sommet de la portion de liaison 30 dans une direction parallèle aux deux bordures opposées parallèles 34, 36. La languette 40 présente une extrémité libre 42 terminée par un retour 44 formant butée et s'étendant à l'opposé de la partie d'ancrage 12. Ainsi, la languette 40 s'étend sensiblement parallèlement au premier plan moyen Pm1 de la partie d'ancrage 12.

Le support de connecteur 10 ainsi décrit est adapté à être installé dans la paroi d'un moule d'assise de siège de véhicule automobile non représenté et prévu à cet effet. Autrement dit, la partie d'agrafage 14 est engagée dans un logement adapté de la paroi, tandis que la partie d'ancrage 12 vient s'étendre à distance de la paroi du moule et sensiblement parallèlement à cette paroi.

Un mélange de prépolymères d'isocyanates et de polyols est alors injecté dans le moule de l'assise et il s'écoule alors à la paroi du moule, notamment, et vient noyer la partie d'ancrage 12 en s'écoulant à travers les ajours 28 et entre Les nervures croisées 18, 20, 22, 24, 26, 18', 20', 22', 24', et 26'. Les polymères du mélange réagissant les uns avec les autres pour former un polyuréthane et aussi avec l'eau résiduelle, dégage de l'oxyde de carbone qui provoque alors le moussage du polymère. In fine, les réactions terminées, on obtient une mousse de rembourrage formant une assise dans laquelle la partie d'ancrage du support de connecteur 10 est noyée, tandis que la partie d'agrafage s'en étend en saillie. De la sorte, le support de connecteurs 10 est totalement solidaire de la mousse de rembourrage.

On se référera à présent à la figure [Fig. 2] sur laquelle on retrouve en coupe médiane axiale, le support de connecteur 10 dont la partie d'ancrage 12 est précisément noyée dans une portion 46 de mousse de rembourrage, tandis que la partie d'agrafage 14 s'étend en saillie d'une portion de surface 48 de la portion 46 de mousse de rembourrage.

On retrouve ainsi deux parties opposées du bord 16 et la jonction entre les deux nervures 24, 24' emprisonnées dans la mousse de rembourrage.

On retrouve également la portion de liaison 30 surmontée de la platine d'accostage 32 en saillie de la portion de surface 48. Et aussi, on retrouve la languette 40 et son extrémité libre 42 munie de son retour 44 formant butée. En outre, on retrouve le bossage 38.

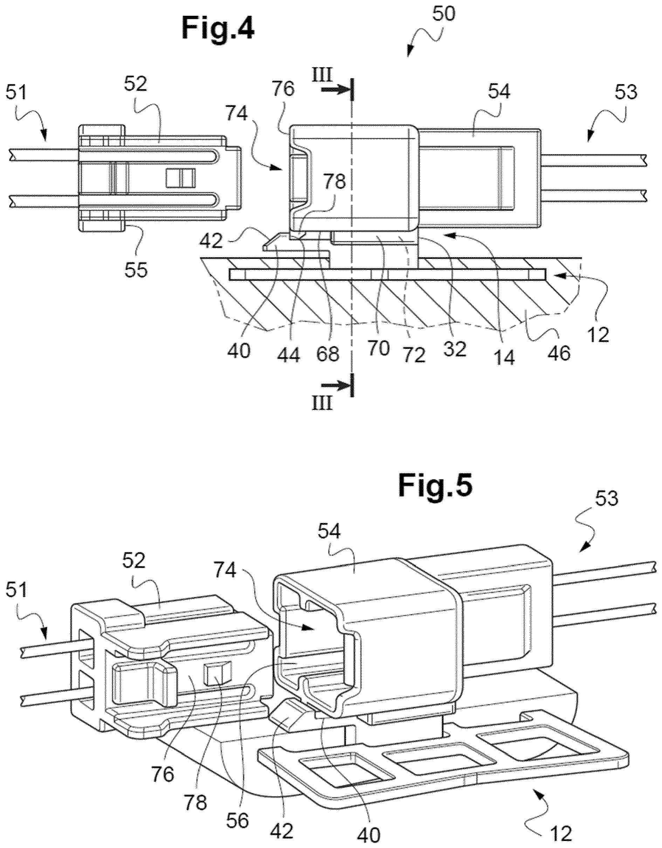

La figure [Fig. 4] à laquelle on va se référer à présent, montre en vue de côté, l'objet de la figure [Fig. 2] et un connecteur 50 présentant une partie mâle 52 équipée d'une première paire de câbles électriques 51 et une partie femelle 54 équipée d'une seconde paire de câbles électriques 53 et que l'on décrira tout d'abord en référence à la figure [Fig. 3] sur laquelle elle est représentée en coupe droite selon la partie de plan III-III. On observera que la partie mâle 52 présente un épaulement 55.

Ainsi, la figure [Fig. 3] montre la partie femelle 54 du connecteur 50. En particulier, la partie femelle 54 présente un logement cylindrique 56 délimité par une paroi cylindrique 58. La paroi cylindrique 58 présente une section sensiblement carrée. En outre, à l'intérieur du logement cylindrique 56, s'étendent des nervures longitudinales de détrompage opposées deux à deux, 60, 62 et 64, 66. Le logement cylindrique 56 est ainsi adapté à recevoir la partie mâle 52 du connecteur 50 en translation.

La partie femelle 54 présente en outre une face d'accrochage 68 munie de deux glissières longitudinales en regard 70, 72 et parallèles entre elles. On observera que les deux glissières 70, 72 sont écartées l'une de l'autre d'une distance D sensiblement égale à la largeur de la platine d'accostage 32 représentée sur la figure [Fig. 1], et que les deux ailes libres en retour des deux glissières 70, 72 sont écartées de la face d'accrochage 68 d'une distance d sensiblement égale à l'épaisseur de la platine d'accostage 32.

Aussi, on observera sur la figure [Fig. 4], que la partie femelle 54 présente une ouverture 74, délimitée par un bord 76 et que, la face d'accrochage 68 présente près du bord 76, un mentonnet 78.

Ainsi, la partie femelle 54 est engagée à coulissement sur la platine d'accostage 32 de manière à ce que les deux bordures opposées parallèles 34, 36 s'engagent respectivement à l'intérieur des deux glissières opposées 70, 72. Grâce au bossage 38, qui vient alors en appui à force contre la face d'accostage 68, l'entraînement de la partie femelle 54 en translation offre une résistance en frottement. À l'inverse, le bossage 38 permet d'offrir une résistance en extraction et ainsi à la désolidarisation de la partie femelle 54 de la platine d'accostage 32.

Comme illustré sur la figure [Fig. 4], la partie femelle 54 est engagée à coulissement sur la platine d'accostage 32, jusqu'à ce que le mentonnet 78 vienne en butée contre le retour 44 de la languette 40.

De la sorte, la partie femelle 54 est maintenue en position fixe sur la platine d'accostage 32. Partant, la partie femelle 54 est également maintenue en position fixe par rapport à la portion 46 de mousse de rembourrage.

On se référera à présent à la figure [Fig. 5] illustrant de trois quarts l'objet de la figure [Fig. 4] et sur laquelle on retrouve la partie mâle 52 du connecteur 50 en regard de l'ouverture 74 de la partie femelle 54.

Ainsi, la partie mâle 52 présente latéralement une lame flexible 76 munie d'un ergot d'arrêt 78 apte à venir en prise à l'intérieur du logement cylindrique 56. La partie mâle 52 est alors engagée en translation à travers l'ouverture 74 à l'intérieur du logement cylindrique 56. Et, tandis que la première paire de câbles électriques 51 se connecte à la seconde paire de câbles électriques 53, l'ergot d'arrêt 78 vient en prise à l'intérieur du logement cylindrique 56, et l'épaulement 55 représenté sur la figure [Fig. 3] vient en appui contre l'extrémité libre 42 de la languette 40. De la sorte, l'extrémité libre 42 de la languette 40 est prise en sandwich entre l'épaulement 55 de la partie mâle 52 et le mentonnet 78 de la partie femelle 54. Partant, le connecteur 50 est verrouillé sur la partie d'agrafage du support de connecteur 10. De la sorte, le connecteur 50 et solidaire de la portion 46 de mousse de rembourrage.

Aussi, l'invention concerne un siège de véhicule automobile non représenté. Celui-ci comprend une ossature et une mousse de rembourrage moulée en polyuréthane. Un support de connecteur tel que défini ci-dessus, est alors installé à la surface de la mousse de rembourrage située, préférentiellement, à l'opposé de la surface de l'assise de l'occupant. Pour cela, la partie d'ancrage dudit support de connecteur est noyée dans la mousse de rembourrage lorsqu'elle est moulée. De la sorte, le siège peut être installé de manière classique dans le véhicule automobile, tandis que les connexions de câbles électriques du siège traversant son ossature peuvent être établies plus rapidement.

## Revendications

1. Support de connecteur (10) de câbles électriques pour maintenir en position fixe un connecteur (50) à l'intérieur d'un siège de véhicule automobile, ledit siège comportant une ossature et une mousse de rembourrage moulée (46), ledit support de connecteur (10) comprenant une partie d'ancrage (12) pour ancrer ledit support à l'intérieur dudit siège et une partie d'agrafage (14) surmontant ladite partie d'ancrage (14), pour recevoir en prise ledit connecteur (50);
**caractérisé en ce que** ladite partie d'ancrage (12) est ajourée de manière à pouvoir venir en prise dans ladite mousse de rembourrage (46) lorsque ladite mousse de rembourrage est moulée.

2. Support de connecteur de câbles électriques selon la revendication 1, **caractérisé en ce que** ladite partie d'ancrage (12) comporte une plaque présentant une pluralité d'ajours (28).

3. Support de connecteur de câbles électriques selon la revendication 1 ou 2, **caractérisé en ce que** les ajours (28) de ladite pluralité d'ajours sont de forme sensiblement rectangulaire.

4. Support de connecteur de câbles électriques selon la revendication 3, **caractérisé en ce que** lesdits ajours (28) sont contiguës de manière à former des nervures (18, 20, 22, 24, 26, 18', 20', 22', 24', 26') respectivement croisées entre-elles.

5. Support de connecteur de câbles électriques selon l'une quelconque des revendications 1 à 3, **caractérisé en ce que** ladite partie d'agrafage (14) comprend une platine d'accostage (32) présentant deux bordures libres opposées (34, 36) parallèles adaptées à recevoir ledit connecteur (50) à coulissement.

6. Support de connecteur de câbles électriques selon la revendication 5, **caractérisé en ce que** ladite partie d'agrafage (14) comprend en outre une languette (40) présentant une extrémité libre (42) en retour opposée à ladite partie d'ancrage et formant butée (44), ladite languette s'étendant dans le prolongement de ladite platine d'accostage (32) selon une direction sensiblement parallèle auxdites bordures libres (34, 36).

7. Support de connecteur de câbles électriques selon la revendication 5 ou 6, **caractérisé en ce que** ladite platine d'accostage (32) présente un bossage (38) s'étendant d'une desdites bordures (34) à l'autre (36), à l'opposé de ladite partie d'ancrage (12).

8. Support de connecteur de câbles électriques selon l'une quelconque des revendications 1 à 7, **caractérisé en ce qu'**il est moulé d'une seule pièce dans un matériau polymère.

9. Siège de véhicule automobile comportant une ossature et une mousse de rembourrage moulée, **caractérisé en ce qu'**il comprend un support de connecteur (10) selon l'une quelconque des revendications 1 à 8, ladite partie d'ancrage (12) dudit support de connecteur étant noyée dans ladite mousse de rembourrage (46) lorsque ladite mousse de rembourrage est moulée.

10. Siège de véhicule automobile selon la revendication 9, **caractérisé en ce que**, ladite mousse de rembourrage (46) présentant une surface libre (48), ladite partie d'ancrage (12) dudit support de connecteur (10) est noyée dans ladite mousse de rembourrage (46), tandis que ladite partie d'agrafage (14) s'étend en saillie de ladite surface libre (48).

## Patentansprüche

1. Verbinderhalterung (10) für Elektrokabel zum Halten eines Verbinders (50) in fester Position im Inneren eines Kraftfahrzeugsitzes, wobei der Sitz ein Gerüst und einen geformten Polsterschaum (46) aufweist, wobei die Verbinderhalterung (10) einen Verankerungsabschnitt (12) zur Verankerung der Halterung im Inneren des Sitzes und einen den Verankerungsabschnitt (14) überragenden Klammerabschnitt (14) zum Eingriff mit dem Verbinder (50) umfasst;
**dadurch gekennzeichnet, dass** der Verankerungsabschnitt (12) mit Öffnungen versehen ist, so dass er in den Polsterschaum (46) eingreifen kann, wenn der Polsterschaum geformt wird.

2. Verbinderhalterung für Elektrokabel nach Anspruch 1, **dadurch gekennzeichnet, dass** der Verankerungsabschnitt (12) eine Platte mit einer Mehrzahl von Öffnungen (28) aufweist.

3. Verbinderhalterung für Elektrokabel nach Anspruch 1 oder 2, **dadurch gekennzeichnet, dass** die Öffnungen (28) der Mehrzahl von Öffnungen im Wesentlichen rechteckig geformt sind.

4. Verbinderhalterung für Elektrokabel nach Anspruch 3, **dadurch gekennzeichnet, dass** die Öffnungen (28) so aneinander angrenzen, dass sie Rippen (18, 20, 22, 24, 26, 18', 20', 22', 24', 26') bilden, die miteinander gekreuzt sind.

5. Verbinderhalterung für Elektrokabel nach einem der Ansprüche 1 bis 3, **dadurch gekennzeichnet, dass** der Klammerabschnitt (14) eine Anlageplatte (32) umfasst, die zwei parallele gegenüberliegende freie Ränder (34, 36) aufweist, die geeignet sind, den Verbinder (50) gleitend aufzunehmen.

6. Verbinderhalterung für Elektrokabel nach Anspruch 5, **dadurch gekennzeichnet, dass** der Klammerabschnitt (14) ferner eine Lasche (40) umfasst, die ein freies Ende (42) in Umkehrung gegenüber dem Verankerungsabschnitt aufweist und einen Anschlag (44) bildet, wobei sich die Lasche in der Verlängerung der Anlageplatte (32) in einer Richtung im Wesentlichen parallel zu den freien Rändern (34, 36) erstreckt.

7. Verbinderhalterung für Elektrokabel nach Anspruch 5 oder 6, **dadurch gekennzeichnet, dass** die Anlageplatte (32) eine Erhebung (38), die sich von einem der Ränder (34) zum anderen (36) erstreckt, gegenüber dem Verankerungsabschnitt (12) aufweist.

8. Verbinderhalterung für Elektrokabel nach einem der Ansprüche 1 bis 7, **dadurch gekennzeichnet, dass** sie einstückig aus einem Polymermaterial geformt ist.

9. Kraftfahrzeugsitz aufweisend ein Gerüst und einen geformten Polsterschaum, **dadurch gekennzeichnet, dass** er eine Verbinderhalterung (10) nach einem der Ansprüche 1 bis 8 umfasst, wobei der Verankerungsabschnitt (12) der Verbinderhalterung in dem Polsterschaum (46) eingebettet wird, wenn der Polsterschaum geformt wird.

10. Kraftfahrzeugsitz nach Anspruch 9, **dadurch gekennzeichnet, dass**, der Polsterschaum (46) eine freie Fläche (48) aufweisend, der Verankerungsabschnitt (12) der Verbinderhalterung (10) im Polsterschaum (46) eingebettet ist, während sich der Klammerabschnitt (14) von der freien Fläche (48) hervorstehend erstreckt.

## Claims

1. Electrical cable connector support (10) for holding a connector (50) in a fixed position within a motor vehicle seat, said seat comprising a framework and a moulded upholstery foam (46), said connector support (10) comprising an anchoring part (12) for anchoring said support within said seat and a stapling part (14) surmounting said anchoring part (14) to engagingly receive said connector (50); **characterized in that** said anchoring part (12) is apertured so as to be able to engage in said upholstery foam (46) when said upholstery foam is moulded.

2. Electrical cable connector support according to Claim 1, **characterized in that** said anchoring part (12) comprises a plate having a plurality of perforations (28) .

3. Electrical cable connector support according to Claim 1 or 2, **characterized in that** the apertures (28) of said plurality of apertures are of substantially rectangular shape.

4. Electrical cable connector support according to Claim 3, **characterized in that** said apertures (28) are contiguous so as to form ribs (18, 20, 22, 24, 26, 18', 20', 22', 24', 26') respectively crossed with one another.

5. Electrical cable connector support according to any one of Claims 1 to 3, **characterized in that** said stapling part (14) comprises a docking plate (32) having two parallel opposite free edges (34, 36) adapted to slidingly receive said connector (50).

6. Electrical cable connector support according to Claim 5, **characterized in that** said stapling part (14) further comprises a tongue (40) having a turned-back free end (42) opposite to said anchoring part and forming a stop (44), said tongue extending in the continuation of said docking plate (32) in a direction substantially parallel to said free edges (34, 36).

7. Electrical cable connector support according to Claim 5 or 6, **characterized in that** said docking plate (32) has a boss (38) extending from one of said edges (34) to the other (36) away from said anchoring part (12) .

8. Electrical cable connector support according to any one of Claims 1 to 7, **characterized in that** it is moulded in one piece from a polymer material.

9. Motor vehicle seat comprising a framework and a moulded upholstery foam, **characterized in that** it comprises a connector support (10) according to any one of Claims 1 to 8, said anchoring part (12) of said connector support being embedded in said upholstery foam (46) when said upholstery foam is moulded.

10. Motor vehicle seat according to Claim 9, **characterized in that**, with said upholstery foam (46) having a free surface (48), said anchoring part (12) of said connector support (10) is embedded in said upholstery foam (46), whereas said stapling part (14) projects from said free surface (48).
